# EUROPÄISCHE PATENTSCHRIFT

(11) **EP 1 848 832 B1**
(45) Veröffentlichungstag und Bekanntmachung des Hinweises auf die Patenterteilung: **31.12.2008**
(21) Anmeldenummer: 06707051.6
(22) Anmeldetag: 17.02.2006
(51) Int. Cl.: C21C 5/52, F27B 3/04, F27B 3/08, F27B 3/10

(54) **OFENANLAGE UND VERFAHREN ZUM EINSCHMELZEN VON METALLISCHEN ODER METALLHALTIGEN EINSATZSTOFFEN**
FURNACE SYSTEM AND METHOD FOR MELTING DOWN METALLIC OR METAL-CONTAINING FEED MATERIAL
INSTALLATION DE FOURNEAU ET PROCEDE POUR FAIRE FONDRE DES MATERIAUX DE CHARGE METALLIQUES OU METALLIFERES

(30) Priorität: 19.02.2005 DE 102005007655
(43) Veröffentlichungstag der Anmeldung: 31.10.2007
(73) Patentinhaber: SMS Demag AG, 40237 Düsseldorf (DE)
(72) Erfinder: SCHUBERT, Manfred, 46147 Oberhausen (DE)
(74) Vertreter: Klüppel, Walter
(86) Internationale Anmeldenummer: PCT/EP2006/001464
(87) Internationale Veröffentlichungsnummer: WO 2006/087212

(56) Entgegenhaltungen:
- EP-A1- 0 717 115
- DE-A1- 10 332 866
- TRENKLER H: "ENERGY-SAVING DC TWIN SHELL ARC FURNACE FOR MELTING LOW-GRADE SCRAP" ABB REVIEW, ABB ASEA BROWN BOVERI, ZURICH, CH, Nr. 9/10, 1996, Seiten 18-27, XP000681512 ISSN: 1013-3119

## Beschreibung

Die Erfindung betrifft eine Ofenanlage und ein Verfahren zum Einschmelzen von metallischen oder metallhaltigen Einsatzstoffen nach den Oberbegriffen der Ansprüche 1 und 8.

Aus der DE 44 34 369 A1 und der EP 0 717 115 B1 sind Doppel-Elektrolichtbogenofen-Anlagen bekannt, mit denen nacheinander Frisch- und Einschmelzprozesse durchgeführt werden. Wechselweise werden in die beiden Öfen Eisenein-satzstoffe chargiert, nichtelektrische Wärmeenergie durch Zufuhr von Sauerstoff eingebracht und ein Frischen durchgeführt. Anschließend wird Wärmeenergie über einen elektrischen Lichtbogen eingebracht, danach abgeschlackt und die Flüssigschmelze abgestochen.

Ein entsprechendes Verfahren wird auch in der Doppelofenanlage nach der DE 103 32 866 A1 durchgeführt. Diese Doppelofenanlage zeichnet sich dadurch aus, dass neben den beiden Öfen auch die Elektrodentragvorrichtung auf einer separaten Kippbühne angeordnet ist, wobei die dritte Kippbühne in unmittelbarer Abhängigkeit der Kippbewegungen jeweils einer der Ofenbühnen für ein Ofengefäß kippbar ist.

Auch ist es bekannt, in einer Ofenanlage, die aus zwei einzelnen kippbaren O-fengefäßen besteht, im Wechsel über eine schwenkbare Elektrodenanordnung Eiseneinsatzstoffe (Schrott, DRI (direkt reduziertes Eisen) oder HBI) mit elektrischer Energie mit geringfügigem Primärenergieeinsatz durch Brenner einzuschmelzen, zu überhitzen und die gewünschte Analyse einzustellen. Hierbei erweist sich als weniger günstig, dass das jeweils unbenutzte Gefäß auskühlt und somit der Gesamtenergieverbrauch ansteigt. Auch ist der Wirkungsgrad des Primärenergieeinsatzes nicht allzu hoch, da durch die unzureichende Höhe des Schrotts über den Brennern nur ein begrenzter Wärmeübergang stattfinden kann. Während des Einschmelzens freiwerdendes CO-Gas entweicht größtenteils unverbrannt in die Abgasleitung.

Die Druckschrift XP 000681512 offenbart eine Ofenanlage zum Einschmelzen von metallischem Chagiergut, wobei der Ofen aus einem Gefäßunterteil und einem Gefäßoberteil besteht. Das Gefäßoberteil ist auf das Gefäßunterteil aufgesetzt und umfasst eine Gefäßwandung, welche gegenüber der Gefäßwandung des Gefäßunterteils wesentlich nach oben verlängert ist. Der Ofen wird in einem zweistufigen Verfahren betrieben, wobei in einer ersten Stufe eine Vorheizung des Chagiergutes und in einer zweiten Stufe ein Einschmelzen des vorgeheizten Chagiergutes vorgesehen ist. Zum Vorheizen des Chagiergutes auf ca. 550° sind Brenner und Sauerstoffinjektoren auf verschiedenen Höhen des Gefäßunterteils und insbesondere des Gefäßoberteils vorgesehen. Das nachfolgende Einschmelzen des zuvor vorgewärmten Chagiergutes erfolgt im Wesentlichen mit Hilfe einer Gleichspannungselektrode wobei der Ofen dann als Lichtbogenofen fungiert. Zusätzlich unterstützen die zuvor bereits erwähnten Brenner den Schmelzprozess.

Ausgehend von diesem Stand der Technik liegt der Erfindung die Aufgabe zugrunde, eine Ofenanlage und ein Verfahren zu deren Betrieb dahingehend weiterzubilden, dass der Wirkungsgrad der Wärmeübertragung weiter verbessert wird.

Diese Aufgabe wird bei dem Gegenstand des Patentanspruchs 1 dadurch gelöst, dass ein Elektrodendeckel mit einer Elektrodenanordnung anstelle des Gefäßoberteils auf das Gefäßunterteil aufgesetzt wird, nachdem die Chagiersäule so weit herunter geschmolzen ist, bis das nach oben verlängerte Gefäßoberteil frei von Chagiergut ist und das Gefäßoberteil weggeschwenkt werden kann. Der Elektrodendeckel mit der Elektrodenanordnung dient zum Fertigstellen der Schmelze hauptsächlich mit Sekundärenergie.

Die Aufgabe wird auch durch Verfahren nach Anspruch 8 gelöst.

Kern der Erfindung ist das Nutzen von Primär- und Sekundärenergie für das Einschmelzen von Metallschrott und DRI/HBI oder anderen metallischen oder metallhaltigen Stoffen. Hierzu wird eine Ofenanlage mit vorzugsweise zwei Gefäßen und einer schwenkbaren Elektrodenanordnung um ein weiteres Gefäßoberteil mit einem zusätzlichen Deckel ergänzt, die an einer Drehvorrichtung so angeordnet sind, dass sie auf das Gefäßunterteil eines Ofens aufgesetzt werden können. Bei einer Doppelofenanlage ist jedem Ofen hierbei eine Drehvorrichtung zugeordnet, oder beide Öfen werden mittels einer gemeinsamen Drehvorrichtung bedient.

Indem durch das Gefäßoberteil die Gefäßwandung des Gefäßunterteils wesentlich nach oben verlängert wird, wird eine Ofenhöhe erhalten, die erheblich höher als die ursprüngliche Höhe (Originalhöhe) bzw. die Höhe des anderen Ofens im Falle eines Doppelofens ist. Auf diese Weise wird eine Wärmeübertragung auf den Schrott mit hohem Wirkungsgrad erreicht.

Es wird demnach zum einen mittels des verlängerten Gefäßoberteils unter Einsatz von Primärenergie ein (Vor)schmelzgefäß geschaffen und zum anderen ein Ofen, in dem der weitere Schmelzprozess bzw. die Überhitzung mittels elektrischer Sekundärenergie abläuft.

Nach einer vorteilhaften Weiterbildung ist die Gefäßwandung des Gefäßoberteils wassergekühlt oder mit Feuerfestmaterial ausgemauert. Für die Wasserkühlung ist die Gefäßwandung wasserdurchflossen bzw. besteht aus einem Rohr-Wand-System.

In das Gefäßunterteil und/oder das Gefäßoberteil sind mehrere leistungsstarke Brenner/Injektoren entlang des Umfanges des Gefäßes verteilt eingebaut, mit denen die Chargiersäule ganz oder zumindest soweit, dass das Gefäßoberteil frei von Chargiergut ist, eingeschmolzen wird. Nach dem Herunterschmelzen des Chargiergutes wird das Gefäßoberteil mit dem dazugehörigen Deckel zur Seite geschwenkt und die Elektrodenanordnung mit ihrem eigenen Deckel eingeschwenkt. Mittels elektrischer Energie, unterstützt durch ggf. Brenner sowie Kohlenstoff- und Sauerstoffinjektoren, wird die Schmelze fertiggestellt. Während dieser Zeit wird in dem anderen Gefäß im Falle eines Doppelofens bereits wieder das Chargiergut mit Primärenergie heruntergeschmolzen.

Weitere Einzelheiten und Vorteile der Erfindung ergeben sich aus den Unteransprüchen und aus der nachfolgenden Beschreibung, in der die in den Figuren dargestellte Ausführungsform der Erfindung näher erläutert wird. Es zeigen:
- Fig. 1: einen Aufriss einer Doppelofen-Anlage;
- Fig. 2: die zu Fig. 1 gehörende Draufsicht auf die Doppelofen-Anlage mit einem vom Ofengefäß B weggeschwenkten Ofendeckel.

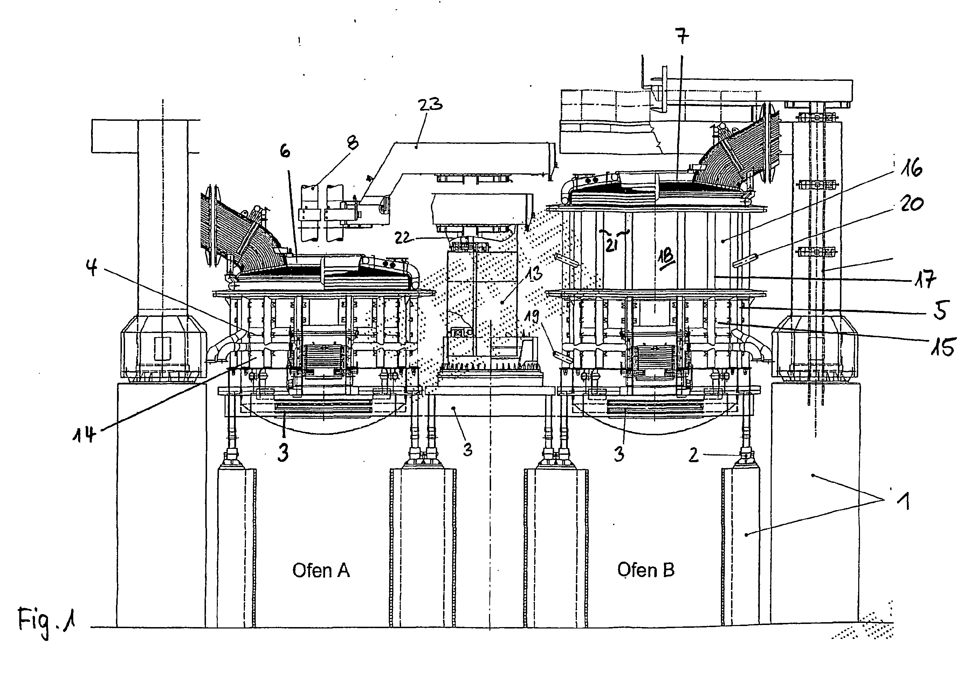

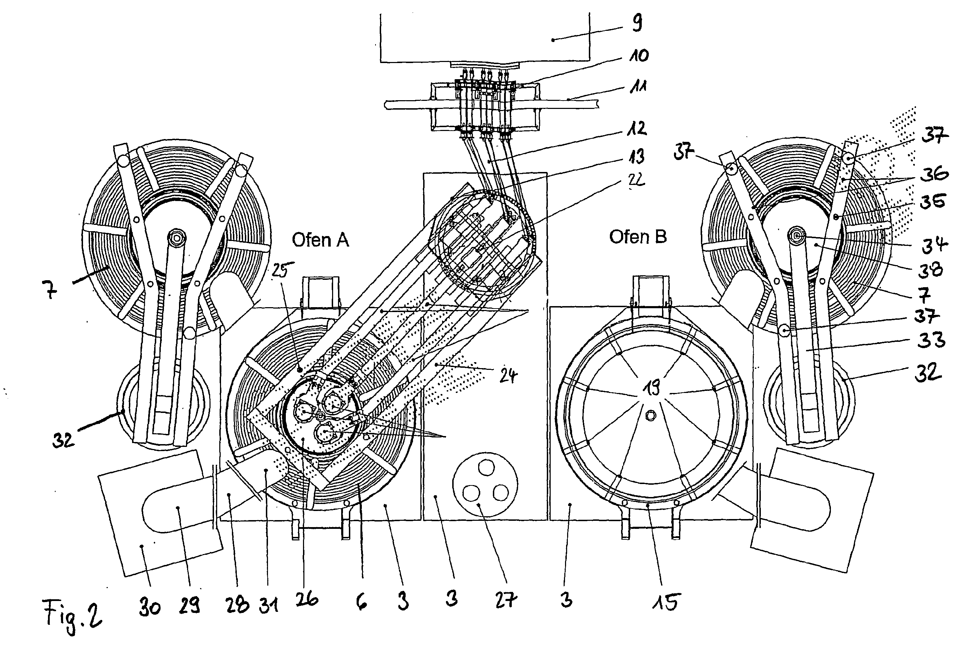

Auf Fundamenten 1 sind für einen Ofen A und einen gleichen Ofen B einer Ofenanlage mittels eines Unterbaus 2 jeweils eine kippbare Ofenbühne 3 für jeweils ein Ofengefäß 4, 5 mit einem Ofendeckel 6, 7 angeordnet (vgl. Fig. 1). Elektroden 8 werden von einem Ofentransformator 9 (vgl. Fig. 2) über eine Hochstromverbindung 10 durch eine Transformatoren-Hauswand 11 mittels Hochstromseilen 12 versorgt. Die Elektroden 8 können mittels einer Schwenksäule 13 über den Ofen A oder den Ofen B geschwenkt werden. Auf die Elektrodenanordnung wird weiter unten noch näher eingegangen.

Jeder der beiden Öfen A und B bzw. der Ofengefäße 4, 5 umfasst ein sich entsprechendes Gefäßunterteil 14, 15, auf das wechselweise die Elektrodenanordnung oder das Gefäßoberteil (17) aufgesetzt werden können. In der gezeigten Stellung ist auf das Gefäßunterteil 14 des Ofens A ein Elektrodendeckel 6 aufgesetzt. Auf das Gefäßunterteil 15 des Ofens B ist ein Gefäßoberteil 17 aufgesetzt, das als (Vor)schmelz- oder (Vor)heizgefäß (16) eine im Verhältnis zum Gefäßunterteil 15 annähernd hohe, sich vertikal erstreckende, Wandung 18 aufweist. Nach oben hin ist das Gefäßoberteil 17 mittels eines separaten Deckels 7 verschlossen. Entlang des Umfangs des Gefäßunterteils 15 sind Brenner 19 angeordnet (vgl. auch Fig. 2), mit deren Hilfe Primärenergieträger in das Gefäßunterteil 15 eingegeben werden. Düsen 20 oder Injektoren für Luft oder Sauerstoff sind entlang des Umfangs des Gefäßoberteils 17 angeordnet, um während des Herunterschmelzens der Chargiersäule entstehendes CO-Gas gezielt zu verbrennen.

Entlang der Gefäßwandung 18 des Gefäßoberteils 17 erstrecken sich wasserdurchflossene Rohre 21 zur Kühlung. Alternativ oder gleichzeitig kann die Wandung 18 zum Inneren mit Feuerfestmaterial ausgemauert sein.

Die Elektrodenanordnung umfasst Elektroden 8, die mittels der Hubsäule 22 mit einer Säulenführung und einem Hubzylinder zur Elektrodenregelung und der Elektroden-Tragvorrichtung 23 eingestellt werden. Sodann sind Tragarme 24 für den Deckel 6 vorgesehen, der mittels Hubzylindern 25 höheneinstellbar (vgl. Fig. 2) ist. Das Elektroden-Herzstück ist mit 26 bezeichnet. Außerdem ist eine Elektroden-Nachsetzvorrichtung 27 vorhanden.

An das mit der Kippbühne 3 verbundene Abgasrohr 28 ist bei eingeschwenkter Lage ein ortsfestes Abgasrohr 29 mit einer Nachbrennkammer 30 anzuschließen. An den Deckeln sind jeweils Abgasstutzen 31 angeordnet. Hinsichtlich dieser Abgasrohre sowie weiterer Details des Tragarm-Hubwerks mit Hubzylindern wird auf den Offenbarungsgehalt der DE 103 32 866 A1 verwiesen.

Zwischen den Ofenbühnen 3 der Öfen A und B ist eine dritte Kippbühne 3 angeordnet, auf der sich die Schwenksäule 12 und die Elektroden-Nachsetzvorrichtung 27 befinden.

Nachfolgend werden das Gefäßoberteil 17 mit Deckel 7 sowie deren Verschwenk-Mechanismus beschrieben. Mit 32 ist eine Schwenksäule für das Verschwenken des Gefäßoberteils 17 mit Deckel 7 bezeichnet. Jedem Ofen A und B ist eine separate Schwenksäule 32 zugeordnet. Im Einzelnen besteht die Schwenksäule 32 aus einem inneren mittigen Tragarm 33, an dessen Spitze ein Brenner 34 angebracht ist, der über eine Leitung durch den Tragarm versorgt wird. Der Brenner 34 wird von dem Tragarm 33 getragen, der mit einer Führungssäule verbunden ist und in Führungsrollen geführt ist. Die Hubbewegung von Tragarm 33 und Brenner 34 erfolgt über einen in die Führungssäule eingebauten Hydraulikzylinder. Das Einbringen der Primärenergie kann grundsätzlich nur über starke Seitenbrenner 19 im Gefäßunterteil (14, 15) oder starke Seitenbrenner (19, 20) im Gefäßunterteil (14, 15) und Gefäßoberteil (17) erfolgen. Zusätzlich kann die Primärenergie durch Brenner 34 eingebracht werden.

Die Schwenkvorrichtung umfasst des Weiteren ein Hubwerk 35 für das Gefäßoberteil 17 mit Deckel bzw. zwei Tragarme 36.

Entlang der Tragarme 36 sind Hubzylinder 37 für das Gefäßoberteil 17 mit Deckel angeordnet. Der Deckel 7 mit dem Gefäßoberteil 17 wird über das Gefäßunterteil geschwenkt und dann über die Hubzylinder 37 durch die Bewegung der jeweiligen Kolbenstange in eine Verschließposition nach unten verfahren. Mit 38 ist das Herzstück bezeichnet.

Mit Hilfe der beiden Figuren werden unterschiedliche Prozesszustände des Einschmelzverfahrens dargestellt. Während in dem Ofen A ein Einschmelzen oder Überhitzen mit im Wesentlichen Sekundärenergie abläuft, findet zeitgleich im Ofen B ein Einschmelzen der Chargiersäule, insbesondere Schrottsäule, mittels Primärenergie statt.

Hierzu werden auf den Ofen B durch Verschwenken des Hubwerks 35 mittels der Schwenksäule 32 das Gefäßoberteil 17 bzw. das Vorschmelzgefäßes 16 mit Deckel 7 auf das Gefäßunterteil 15 aufgesetzt. Dann wird die Verbindung Deckel 7 und Gefäßoberteil 17 entkoppelt und der Deckel 7 ausgeschwenkt. Anschließend werden die Einsatzstoffe in das offene Gefäß chargiert. DRI und HBI können auch über separate Öffnungen im Deckel 7 zugeführt werden. Die Einsatzstoffe werden so chargiert, wobei eine in das Gefäßoberteil 17 hineinreichende Chargiersäule entsteht. Dann wird ggf. der Brenner 34 eingeschwenkt. Durch Betätigen der Brenner 19 bzw. 34 wird die Chargiersäule mindestens soweit, dass das Gefäßoberteil 17 frei von festem Einsatzstoff ist, heruntergeschmolzen. Anschließend wird das Gefäßoberteil 17 mit dem Deckel 7 wieder herausgeschwenkt und die Elektrodenanordnung eingeschwenkt. Dann erfolgt ein weiteres Aufschmelzen oder Überhitzen der Charge durch elektrische Energie.

Durch die vorgeschlagene Erfindung wird eine vorteilhafte Nutzung von Primär-und Sekundärenergie für das Einschmelzen von Metallschrott, DRI, HBI sowie anderen metallischen oder metallhaltigen Stoffen erreicht.

Die Erfindung richtet sich sowohl auf eine Einzel- als auch in Weiterbildung auf eine Doppelofenanlage.

### Bezugszeichenliste:

- 1: Fundamente
- 2: Unterbau
- 3: kippbare Bühne für die Öfen und die Elektrodentragvorrichtung
- 4: Ofengefäß
- 5: Ofengefäß
- 6: Ofendeckel
- 7: Ofendeckel
- 8: Elektroden
- 9: Ofentransformator
- 10: Hochstromverbindung
- 11: Transformatoren-Hauswand
- 12: Hochstromseile
- 13: Schwenksäule für das Elektrodenschwenken
- 14: Gefäßunterteil
- 15: Gefäßunterteil
- 16: (Vor)schmelzgefäß
- 17: Gefäßoberteil
- 18: Gefäßwandung
- 19: Brenner
- 20: Düsen
- 21: Kühlrohre
- 22: Hubsäule mit Säulenführung und Hubzylinder zur Elektrodenregelung
- 23: Elektroden-Tragvorrichtung
- 24: Tragarme für den Elektroden-Innendeckel
- 25: Hubzylinder
- 26: Elektroden-Innendeckel (Elektroden Herzstück)
- 27: Elektroden-Nachsetzvorrichtung
- 28: Abgasrohr kippbar
- 29: ortsfestes Abgasrohr
- 30: Nachbrennkammer
- 31: Abgasstutzen
- 32: Schwenksäule für das Verschwenken des Gefäßoberteils mit Deckel
- 33: mittiger Tragarm
- 34: Brenner
- 35: Hubwerk für das Gefäßoberteil mit Deckel
- 36: Tragarme für das Gefäßoberteil mit Deckel
- 37: Hubzylinder für das Gefäßoberteil mit Deckel
- 38: Herzstück

## Patentansprüche

1. Ofenanlage zum Einschmelzen von metallischem oder metallhaltigem Chargiergut, umfassend mindestens einen Ofen (A,B) mit:
einem Gefäßunterteil (14, 15) und einem Gefäßoberteil (17), welches auf das Gefäßunterteil aufsetzbar ist, wobei das Gefäßoberteil eine im Verhältnis zum Gefäßunterteil (15) annähernd hohe, sich vertikal erstreckende Gefäßwandung (18) sowie einen Deckel (7) umfasst; und Brennern (19, 34) zum Einbringen von Primärenergie in das Gefäßunterteil (14, 15) und/oder das Gefäßoberteil (17) zum Herunterschmelzen einer aus dem Chagiergut gebildeten Chargiersäule zu einer Schmelze;
**gekennzeichnet durch**
einen Elektrodendeckel (6) mit einer Elektrodenanordnung (8) zum schwenkbaren,Aufsetzen auf das Gefäßunterteil (14, 15) anstelle des Gefäßoberteils (17), nachdem die Chargiesäule soweit heruntergeschmolzen ist, bis das nach oben verlängerte Gefäßoberteil (17) frei von Chargiergut ist und das Gefäßoberteil weggeschwenkt ist, zum Fertigstellen der Schmelze hauptsächlich mit Sekundärenergie.

2. Ofenanlage nach Anspruch 1,
**dadurch gekennzeichnet,**
**dass** die Gefäßwandung (18) des schwenkbaren Gefäßoberteils (17) von ihrer Höhenerstreckung gleich oder größer als die der Gefäßwandung des Gefäßunterteils (15) ist.

3. Ofenanlage nach Anspruch 1 oder 2,
**dadurch gekennzeichnet,**
**dass** die Brenner (19) seitlichen entlang des Umfanges des Gefäßunterteils und/oder des Gefäßoberteils angeordnet sind.

4. Ofenanlage nach einem der Ansprüche 1 bis 3,
**dadurch gekennzeichnet,**
**dass** dem Gefäßoberteil (17) ein Brenner (34) zum Einbringen von Primärenergie zugeordnet ist, der von oben in das Gefäß einführbar ist.

5. Ofenanlage nach einem der Ansprüche 1 bis 4,
**dadurch gekennzeichnet,**
**dass** die Gefäßwandung (18) des Gefäßoberteils (17) wassergekühlt oder mit Feuerfestmaterial ausgemauert ist.

6. Ofenanlage nach einem der Ansprüche 1 bis 5,
**dadurch gekennzeichnet,**
**dass** im Gefäßunterteil (15) und/oder Gefäßoberteil (17) Brenner (19) oder Düsen (20) oder Injektoren zum Einbringen von Luft und/oder Sauerstoff angeordnet sind.

7. Ofenanlage nach einem der Ansprüche 1 bis 6,
**dadurch gekennzeichnet,**
**dass** diese als Doppelofenanlage ausgebildet ist, wobei wechselweise auf das Gefäßunterteil (14, 15) des einen Ofens (A, B) eine Elektrodenanordnung mit Deckel (6) und auf den jeweils anderen Ofen (B, A) ein Gefäßoberteil (17) aufsetzbar ist.

8. Verfahren zum Betreiben einer Ofenanlage mit mindestens einem Ofen (A, B), welcher ein Gefäßunterteil aufweist, zum Einschmelzen von metallischen oder metallhaltigen Einsatzstoffen, umfassend die folgenden Schritte:
- Aufsetzen auf das Gefäßunterteil (15) ein Gefäßoberteil (17), welches eine im Verhältnis zum Gefäßunterteil (15) annähernd hohe, sich vertikal erstreckende Gefäßwandung (18) sowie einen Deckel (7) umfasst,
- Chargieren der Einsatzstoffe in Form einer in das Gefäßoberteil (17) hineinreichenden Chargiersäule; und
- Einbringen von Primärenergie in das Gefäßoberteil (17) zum Herunterschmelzen der Chargiersäule;
**gekennzeichnet durch**
- Herausschwenken des nach oben verlängerten Gefäßoberteils (17) zusammen mit seinem Deckel (7) vom Gefäßunterteil (15), wenn die Chargiersäule soweit herunter geschmolzen ist, dass das Gefäßoberteil (17) frei von den festen Einsatzstoffen ist; und
- Verschließen des Gefäßunterteils (15) mit einem Elektrodendeckel (6) zum Fertigstellen der Schmelze hauptsächlich mit Hilfe von Sekundärenergie, welche von einer dem Elektrodendeckel (6) zugeordneten Elektrodenanordnung (8) bereitgestellt wird.

9. Verfahren nach Anspruch 8,
**dadurch gekennzeichnet,**
**dass** die Primärenergie durch mindestens seitlich angeordnete Brenner (19) eingebracht wird und beim Einschmelzen mit Hilfe der Brenner (19) eine reduzierende oder nur schwach oxidierende Ofenatmosphäre eingestellt wird.

10. Verfahren nach Anspruch 8 oder 9,
**dadurch gekennzeichnet,**
**dass** entstehendes CO-Gas innerhalb der Chargiersäule mittels zugegebener Luft und/oder Sauerstoff gezielt verbrannt wird und die Schmelzenergie als Verbrennungsenergie verwendet wird.

11. Verfahren nach einem der Ansprüche 8 bis 10,
**dadurch gekennzeichnet,**
**dass** dem Chargiergut zur Unterstützung des Einschmelzvorgangs Kohlenstoffträger beigemischt werden.

12. Verfahren nach einem der Ansprüche 8 bis 11,
**dadurch gekennzeichnet,**
**dass** das weitere Aufschmelzen der Charge hauptsächlich durch Sekundärenergie durch das Einbringen von weitere Primärenergie durch Brenner (19) sowie Kohlenstoff- und Sauerstoffinjektoren unterstützt wird.

13. Verfahren nach einem der Ansprüche 8 bis 12,
**dadurch gekennzeichnet,**
**dass** wechselweise in einem der Öfen (A, B) einer Doppelofenanlage ein Schmelzprozess durch Aufschwenken eines Gefäßoberteils (17) unter Einbringen von Primärenergie und ein Schmelzprozess oder ein Überhitzen durch Aufschwenken einer Elektrodenanordnung hauptsächlich mit Sekundärenergie betrieben werden.

## Claims

1. Furnace system for melting metallic feed stock or feed stock containing metal, comprising at least one furnace (A, B) with: a vessel lower part (14, 15) and a vessel upper part (17) placeable on the vessel lower part, wherein the vessel upper part has in relation to the vessel lower part (15) an approximately high, vertically extending vessel wall (18) as well as a cover (7); and burners (19, 34) for introduction of primary energy into the vessel lower part (14, 15) and/or the vessel upper part (17) for melting down a feed column, which is formed from the feed stock, to form a melt; **characterised by** an electrode cover (6) with an electrode arrangement (8) for pivotable placing on the vessel lower part (14, 15) instead of the vessel upper part (17) after the feed column has been melted down to such an extent that the upwardly prolonged vessel upper part (17) is free of feed stock and the vessel upper part is pivoted away for completing the melt primarily with secondary energy.

2. Furnace system according to claim 1, **characterised in that** the vessel wall (18) of the pivotable vessel upper part (17) is in its height equal to or greater than that of the vessel wall of the vessel lower part (15).

3. Furnace system according to claim 1 or 2, **characterised in that** the burners (19) are arranged laterally along the circumference of the vessel lower part and/or the vessel upper part.

4. Furnace system according to any one of claims 1 to 3, **characterised in that** a burner (34) for introduction of primary energy, which is introducible from above into the vessel, is associated with the vessel upper part (17).

5. Furnace system according to any one of claims 1 to 4, **characterised in that** the vessel wall (18) of the vessel upper part (17) is water cooled or lined with refractory material.

6. Furnace system according to any one of claims 1 to 5, **characterised in that** burners (19) or nozzles (20) or injectors for introduction of air and/or oxygen are arranged in the vessel lower part (15) and/or vessel upper part (17).

7. Furnace system according to any one of claims 1 to 6, **characterised in that** this is constructed as a double furnace system, wherein an electrode arrangement with a cover (6) is placeable on the vessel lower part (14, 15) of one furnace (A, B) and a vessel upper part (17) is placeable on the respective other furnace (B, A).

8. Method of operating a furnace system with at least one furnace (A, B), which comprises a vessel lower part, for melting metallic charge materials or charge materials containing metal, comprising the following steps:
- placing on the vessel lower part (15) a vessel upper part (17) which has in relation to the vessel lower part (15) an approximately high, vertically extending vessel wall (18) as well as a cover (7),
- charging the charge materials in the form of a feed column reaching into the vessel upper part (17); and
- introducing primary energy into the vessel upper part (17) for melting down the feed column;
**characterised by**
- pivoting the upwardly prolonged vessel upper part (17) together with its cover (7) away from the vessel lower part (15) when the feed column has melted down to such an extent that the vessel upper part (17) is free from solid charge materials; and
- closing the vessel lower part (15) with an electrode cover (6) for completing the melt primarily with the help of secondary energy which is provided by an electrode arrangement (8) associated with the electrode cover (6).

9. Method according to claim 8, **characterised in that that** primary energy is introduced by at least one laterally arranged burner (19) and during the melting a reducing or only weakly oxidising furnace atmosphere is set with the help of the burner (19).

10. Method according to claim 8 or 9, **characterised in that** CO gas which arises is selectively combusted within the feed column by means of supplied air and/or oxygen and the melt energy is used as combustion energy.

11. Method according to any one of claims 8 to 10, **characterised in that** carbon carriers are admixed to the feed stock to assist the melting process.

12. Method according to any one of claims 8 to 11, **characterised in that** the further melting of the charge is assisted primarily by secondary energy through the introduction of further primary energy by burners (19) as well as carbon and oxygen injectors.

13. Method according to any one of the claims 8 to 12, **characterised in that** in one of the furnaces (A, B) of a double furnace system there is operation alternately with a melting process by pivoting up a vessel upper part (17) with introduction of primary energy and a melting process or a superheating by pivoting up an electrode arrangement with, primarily, secondary energy.

## Revendications

1. Unité de four pour faire fondre une matière de charge métallique ou métallifère, comportant au moins un four (A, B), avec :
une partie inférieure de cuve (14, 15) et une partie supérieure de cuve (17), qui peut se poser sur la partie inférieure de cuve, la partie supérieure de cuve comprenant une paroi de cuve (18) s'étendant à la verticale, approximativement haute, par rapport à la partie inférieure de cuve (15), ainsi qu'un couvercle ; et des brûleurs (19, 34) pour l'introduction d'énergie primaire dans la partie inférieure de cuve (14, 15) et/ou dans la partie supérieure de cuve (17), pour faire fondre une colonne de charge formée par la matière de charge en une masse en fusion ;
**caractérisée par**
un couvercle d'électrode (6) avec un dispositif d'électrodes (8) pour le placement par pivotement sur la partie inférieure de cuve (14, 15), en remplacement de la partie supérieure de cuve (17), une fois que la colonne de charge a fondu assez loin pour que la partie supérieure de cuve (17) rallongée vers le haut soit libre de matière de charge et que la partie supérieure de cuve soit éloignée par pivotement, pour la finition de la masse en fusion, principalement avec de l'énergie secondaire.

2. Unité de four selon la revendication 1,
**caractérisée en ce que,**
dans son extension en hauteur, la paroi de cuve (18) de la partie supérieure de cuve (17) pivotante est supérieure ou égale à celle de la paroi de cuve de la partie inférieure de cuve (15).

3. Unité de four selon la revendication 1 ou 2,
**caractérisée en ce que,**
les brûleurs (19) sont disposés latéralement le long de la périphérie de la partie inférieure de cuve et/ou de la partie supérieure de cuve.

4. Unité de four selon l'une quelconque des revendications 1 à 3,
**caractérisée en ce que,**
à la partie supérieure de cuve (17) est associé un brûleur (34) pour l'introduction d'énergie primaire, qui est susceptible d'être introduit par le dessus dans la cuve.

5. Unité de four selon l'une quelconque des revendications 1 à 4,
**caractérisée en ce que,**
la paroi de cuve (18) de la partie supérieure de cuve (17) est refroidie à l'eau ou maçonnée de matière réfractaire.

6. Unité de four selon l'une quelconque des revendications 1 à 5,
**caractérisée en ce que,**
dans la partie inférieure de cuve (15) et/ou dans la partie supérieure de cuve (17) sont disposés des brûleurs (19) ou des buses (20) ou injecteurs pour l'introduction d'air et/ou d'oxygène.

7. Unité de four selon l'une quelconque des revendications 1 à 6,
**caractérisée en ce que,**
cette dernière est conçue sous la forme d'une unité à double four, alors qu'alternativement, sur la partie inférieure de cuve (14, 15) de l'un des fours (A, B), un dispositif d'électrodes avec couvercle (6) et sur l'autre four respectif (B, A), une partie supérieure de cuve (17) peut être posé(e).

8. Procédé pour faire fonctionner une unité de four avec au moins un four (A, B), lequel comporte une partie inférieure de cuve, pour faire fondre des matières de charge métalliques ou métallifères, comportant les étapes suivantes :
- placement sur la partie inférieure de cuve (15) d'une partie supérieure de cuve (17), comprenant une paroi de cuve (18) s'étendant à la verticale, approximativement haute, par rapport à la partie inférieure de cuve (15), ainsi qu'un couvercle (7),
- chargement des matières de charge sous la forme d'une colonne de charge arrivant dans la partie supérieure de cuve (17) ; et
- introduction d'énergie primaire dans la partie supérieure de cuve (17), pour faire fondre la colonne de charge ;
**caractérisé par**
- une sortie par pivotement de la partie supérieure de cuve (17) prolongée vers le haut, en commun avec son couvercle (7) hors de la partie inférieure de cuve (15), lorsque la colonne de charge a fondu assez loin pour que la partie supérieure de cuve (17) soit libre des matières de charges solides ; et
- une fermeture de la partie inférieure de cuve (15) avec un couvercle d'électrode (6) pour la finition de la masse en fusion, essentiellement à l'aide d'énergie secondaire, qui est mise à disposition par un dispositif d'électrodes (8) associé au couvercle d'électrode (6).

9. Procédé selon la revendication 8,
**caractérisé en ce que,**
l'énergie primaire est introduite par au moins des brûleurs (19) disposés latéralement et lors de la fonte, une atmosphère réductrice et seulement faiblement oxydante est réglée dans le four, à l'aide des brûleurs.

10. Procédé selon la revendication 8 ou 9,
**caractérisé en ce que,**
le gaz CO produit est brûlé de façon adéquate à l'intérieur de la colonne de charge au moyen d'air et/ou d'oxygène ajouté et l'énergie de fonte est utilisée en tant qu'énergie de combustion.

11. Procédé selon l'une quelconque des revendications 8 à 10, **caractérisé en ce que,**
on mélange à la matière de charge des supports de carbone pour assister le processus de fonte.

12. Procédé selon l'une quelconque des revendications 8 à 11, **caractérisé en ce que,** la fonte ultérieure de la charge est assistée essentiellement par l'introduction d'énergie primaire supplémentaire par des brûleurs (19), ainsi que par des injecteurs de carbone et d'oxygène.

13. Procédé selon l'une quelconque des revendications 8 à 12, **caractérisé en ce qu'**alternativement, dans l'un des fours (A, B) d'une unité à double four, on fait fonctionner un processus de fonte par montage par pivotement d'une partie supérieure de cuve (17) ou une surchauffe par montage par pivotement d'un dispositif d'électrodes, principalement avec de l'énergie secondaire.
